# EUROPÄISCHE PATENTANMELDUNG

(11) **EP 2 093 518 A1**
(43) Veröffentlichungstag der Anmeldung: **26.08.2009**
(21) Anmeldenummer: 09000490.4
(22) Anmeldetag: 15.01.2009
(51) Int. Cl.: F24J 2/05, F24J 2/18

(54) **Solarkollektor**

(30) Priorität: 21.02.2008 DE 102008010316
(71) Anmelder: Fraunhofer-Gesellschaft zur Förderung der angewandten Forschung e.V., 80686 München (DE)
(72) Erfinder: Kirchhoff, Volker, 01829 Wehlen (DE); Hartung, Ullrich, 01129 Dresden (DE); Kopte, Torsten, 01731 Kreischa (DE); Klostermann, Heidrun, 01326 Dresden (DE); Fietzke, Fred, 01728 Hänichen (DE)

(57) **Zusammenfassung**

Die Erfindung betrifft einen Solarkollektor, umfassend mindestens ein von einem Wärmeträgermedium durchströmtes Absorberrohr (11) und einen aus Sonnenstrahlrichtung betrachtet mindestens hinter dem Absorberrohr (11) angeordneten Spiegel (13), welcher das einfallende Sonnenlicht in Richtung Absorberrohr (11) reflektiert, wobei aus Sonnenstrahlrichtung betrachtet vor dem Absorberrohr (11) ein für Sonnenlicht transparentes Substrat (14) angeordnet ist, welches zumindest in einem Oberflächenbereich eine Beschichtung (15) aufweist, die Wärmestrahlung in Richtung Absorberrohr (11) reflektiert.

## Beschreibung

### Beschreibung

Die Erfindung betrifft einen Solarkollektor, mit dem die Energie des Sonnenlichts in Wärmeenergie umwandelbar ist.

Ein Solarkollektor besteht im einfachsten Fall aus einem Rohr, das von einem Wärmeträgermedium durchflossen und mit Sonnenstrahlung beaufschlagt wird. Aus dem Stand der Technik sind verschiedene Vorrichtungen bekannt, mit denen der Wirkungsgrad eines Solarkollektors verbessert werden kann. So ist das vom Wärmeträgermedium durchflossene und mit Sonnenlicht beaufschlagte Rohr, nachfolgend als Absorberrohr bezeichnet, oftmals mit einer Schicht versehen, welche das Absorbieren der Sonnenlichtenergie verbessert.

Ebenfalls ist es bekannt, aus Sonnenstrahlrichtung betrachtet hinter dem Absorberrohr einen Spiegel anzuordnen, der einen Teil des am Absorberrohr vorbeigehenden Sonnenlichts zurück zum Absorberrohr reflektiert. Derartige Spiegel sind oftmals als Spiegelschicht auf einem für Sonnenlicht transparenten rohrförmigen Substrat abgeschieden, welches das Absorberrohr umschließt (DE 10 2004 020 850 A1, DE 298 08 532 U1). Durch entsprechende Ausgestaltungsformen der Spiegel und/oder des Absorberrohres (Absorberschichten beispielsweise aus Schwarzchrom, Schwarznickel oder Titanoxinitrid) lässt sich der Wirkungsgrad eines Solarkollektors weiter verbessern. Dennoch gelingt es nur, einen Bruchteil der Energie des Sonnenlichts in Wärmeenergie umzuwandeln.

### Aufgabenstellung

Der Erfindung liegt daher das technische Problem zugrunde, einen Solarkollektor zu schaffen, mit dem gegenüber dem Stand der Technik ein höherer Wirkungsgrad beim Umwandeln der Energie des Sonnenlichts in Wärmeenergie erzielbar ist.

Die Lösung des technischen Problems ergibt sich durch die Gegenstände mit den Merkmalen des Patentanspruchs 1. Weitere vorteilhafte Ausgestaltungen der Erfindung ergeben sich aus den abhängigen Patentansprüchen.

Ein erfindungsgemäßer Solarkollektor umfasst mindestens ein von einem Wärmeträgermedium durchströmtes Absorberrohr, hinter welchem aus Sonnenstrahlrichtung betrachtet ein Spiegel angeordnet ist, der einen Teil des am Absorberrohr vorbei gehenden Sonnenlichts in Richtung Absorberrohr reflektiert. Weiterhin umfasst ein erfindungsgemäßer Solarkollektor ein aus Sonnenstrahlrichtung vor dem Absorberrohr angeordnetes, für Sonnenlicht transparentes Substrat, welches zumindest in einem Oberflächenbereich eine Beschichtung aufweist, die Wärmestrahlung in Richtung Absorberrohr reflektiert. Dadurch wird ein Teil der vom Absorberrohr nach außen abgestrahlten Wärmeenergie zurück zum Absorberrohr reflektiert, von diesem absorbiert und an das Wärmeträgermedium abgegeben, wodurch der Wirkungsgrad eines erfindungsgemäßen Solarkollektors gegenüber dem Stand der Technik erhöht ist.

Als Absorberrohr sind alle aus dem Stand der Technik bekannten Ausführungsformen hinsichtlich Form und absorptionssteigernder Beschichtung geeignet. Im einfachsten Fall ist das Absorberrohr ein gerades Rohr. Unter dem Begriff Absorberrohr im erfindungsgemäßen Sinn sind jedoch auch solche Absorberrohre zu verstehen, die beispielsweise U-förmig gebogen sind, mehrere Windungen aufweisen oder gar spiralförmig ausgebildet sind.

Das transparente Substrat, welches beispielsweise aus Glas oder Kunststoff bestehen kann, sollte möglichst viel der vom Absorberrohr abgestrahlten Wärme zurück zum Absorberrohr reflektieren, weshalb eine zum Absorberrohr hin konkave Wölbung des transparenten Substrates vorteilhaft ist. Hinter dem Absorberrohr ist eine solche die Wärmestrahlung reflektierende Beschichtung nicht erforderlich, weil der dort angeordnete und das Sonnenlicht reflektierende Spiegel, dessen Spiegelschicht oftmals aus einem silberhaltigen Material besteht, auch Wärmestrahlung reflektiert.

Die Wärmestrahlung reflektierende Schicht kann auf der dem Absorberrohr zugewandten Seite oder auf der dem Absorberrohr abgewandten Seite des transparenten Substrates abgeschieden sein. Des Weiteren ist zu beachten, dass der direkte Einfall des Sonnenlichtes auf das Absorberrohr nicht zu stark durch das transparente Substrat mit der Wärmestrahlung reflektierenden Beschichtung beeinträchtigt wird. Bei einer Ausführungsform weist daher die Wärmestrahlung reflektierende Beschichtung eine Transmission bezüglich des Sonnenlichts vom mindestens 60 % auf. Eine Wärmestrahlung reflektierende Beschichtung ist daher auch vorteilhafterweise mit einer Dicke von 40 nm bis 200 nm ausgebildet.

Bei einer weiteren Ausführungsform umfasst die Wärmestrahlung reflektierende Beschichtung mindestens eine elektrisch leitfähige Schicht. Schichten aus einem oder mehreren Metallen sind beispielsweise geeignet, Wärmestrahlung zu reflektieren.
Besonders gut wird die Wärmestrahlung von Schichten reflektiert, die Silber als Bestandteil aufweisen oder auch ganz aus Silber bestehen. Eine solche Silberschicht kann eine Schichtdicke von 8 nm bis 30 nm und vorzugsweise von 10 nm bis 20 nm aufweisen.

Eine Wärmestrahlung reflektierende Beschichtung kann jedoch auch mindestens eine dielektrische Schicht umfassen. Wie bereits oben erwähnt soll ein möglichst großer Anteil der auf das transparente Substrat auftreffenden Sonnenstrahlung durch das transparente Substrat hindurch auf das Absorberrohr treffen. Bei einer Ausführungsform ist daher eine dielektrische Schicht derart ausgebildet, dass diese bezüglich des Sonnenlichts entspiegelnd wirkt. Eine dielektrische Schicht, bestehend aus einem Oxid oder einem Nitrid, kann jedoch auch als Schutzschicht ausgebildet sein. So sind beispielsweise Schichten aus Titandioxid oder aus Siliziumnitrid geeignet, bezüglich des Sonnenlichts entspiegelnd zu wirken und/oder auch als Schutzschicht zu fungieren.

Wird beispielsweise eine Oxidschicht als Entspiegelungsschicht und eine silberhaltige Schicht als elektrisch leitfähige Schicht verwendet, kann es vorteilhaft sein, wenn zwischen der silberhaltigen Schicht und der Oxidschicht eine dielektrische Schicht als Blockerschicht ausgebildet wird. Dadurch kann verhindert werden, dass das Silber oxidiert und sich somit Eigenschaften der silberhaltigen Schicht hinsichtlich der Transparenz verschlechtern. Als Blockerschicht sind beispielsweise unterstöchiometrische Oxidschichten, wie unterstöchiometrisches Nickelchromoxid, geeignet.

Für das Abscheiden der einzelnen Schichten einer Wärmestrahlung reflektierenden Beschichtung sind CVD- oder PVD-Verfahren wie Magnetron-Sputtern oder Bedampfen verwendbar.

Das transparente Substrat kann beispielsweise als Rohr ausgebildet sein, welches das Absorberrohr umschließt. Das als Rohr ausgebildete transparente Substrat und/oder das Absorberrohr können weiterhin einen runden oder ovalen Querschnitt aufweisen und beide Rohre können auch konzentrisch zueinander oder nicht konzentrisch zueinander ausgerichtet sein.

Wenn das Rohr und das Absorberrohr einen kreisrunden Querschnitt aufweisen, ist es vorteilhaft, wenn zwischen dem Rohr und dem Absorberrohr ein Vakuum ausgebildet ist. Bei einer Ausführungsform, bei der die elektrisch leitfähige Schicht als Silberschicht ausgeführt und an der Innenseite des Rohres abgeschieden wäre, würde diese Schicht an Luft oxidieren und dadurch ihre Funktionsfähigkeit verlieren. Vakuumbedingungen zwischen Rohr und Absorberrohr schaffen hier Abhilfe. Die Wärmeverluste des Absorberrohres an die Umgebung reduzieren sich in solch einem Fall auf die Wärmeverluste, die durch Wärmestrahlung entstehen, denn bei Vakuumbedingungen kann keine Energie durch Konvektion verloren gehen.

Zwischen dem Rohr und dem Absorberrohr kann jedoch alternativ auch ein Gas, wie beispielsweise ein Edelgas oder aber auch Luft eingelassen sein, wenn die Wärmestrahlung reflektierende Beschichtung beispielsweise eine Schutzschicht umfasst. Das Einbringen eines Edelgases empfiehlt sich insbesondere bei Ausgestaltungsvarianten, bei denen das Rohr und/oder das Absorberrohr keinen kreisrunden Querschnitt aufweisen. Hier könnten nämlich die Druckverhältnisse bei Vakuumbedingungen zwischen den Rohren zu deren Verformung bzw. Zerstörung führen.

Das Rohr, welches das Absorberrohr umschließt und die Wärmestrahlung reflektierende Beschichtung trägt, kann auch als doppelwandiges Rohr mit Vakuumbedingungen zwischen den Doppelwänden ausgebildet sein, wobei die Wärmestrahlung reflektierende Beschichtung im Vakuumbereich zwischen den Doppelwänden abgeschieden ist. In diesem Fall kann eine einfache Montage des Absorberrohres im Rohrinneren bei Atmosphärenbedingungen erfolgen.

Der hinter dem Absorberrohr angebrachte Spiegel zum Reflektieren des Sonnenlichts kann ebenfalls als Spiegelschicht auf der Wandung eines das Absorberrohr umschließenden transparenten Substrats abgeschieden sein. Dabei kann das rohrförmige transparente Substrat ein separates Rohr sein, das das Absorberrohr und das transparente Substrat, das die Wärmestrahlung reflektierende Beschichtung trägt, umschließt, oder aber die Spiegelschicht und die Wärmestrahlung reflektierende Schicht können auf demselben Substrat abgeschieden sein.

Zur weiteren Verbesserung des Wirkungsgrades eines erfindungsgemäßen Solarkollektors trägt auch bei, wenn die Wärmestrahlung reflektierende Beschichtung ein Emissionsvermögen senkrecht zur Beschichtungsoberfläche von maximal 0,1 aufweist.

### Ausführungsbeispiel

Die Erfindung wird nachfolgend anhand bevorzugter Ausführungsbeispiele näher erläutert. Die Fig. zeigen:
- Fig. 1: eine schematische Darstellung einer ersten Ausführungsform eines erfindungsgemäßen Solarkollektors;
- Fig. 2: eine schematische Darstellung einer zweiten Ausführungsform eines erfindungsgemäßen Solarkollektors;
- Fig. 3: eine schematische Darstellung einer dritten Ausführungsform eines erfindungsgemäßen Solarkollektors;
- Fig. 4: eine schematische Darstellung einer vierten Ausführungsform eines erfindungsgemäßen Solarkollektors.

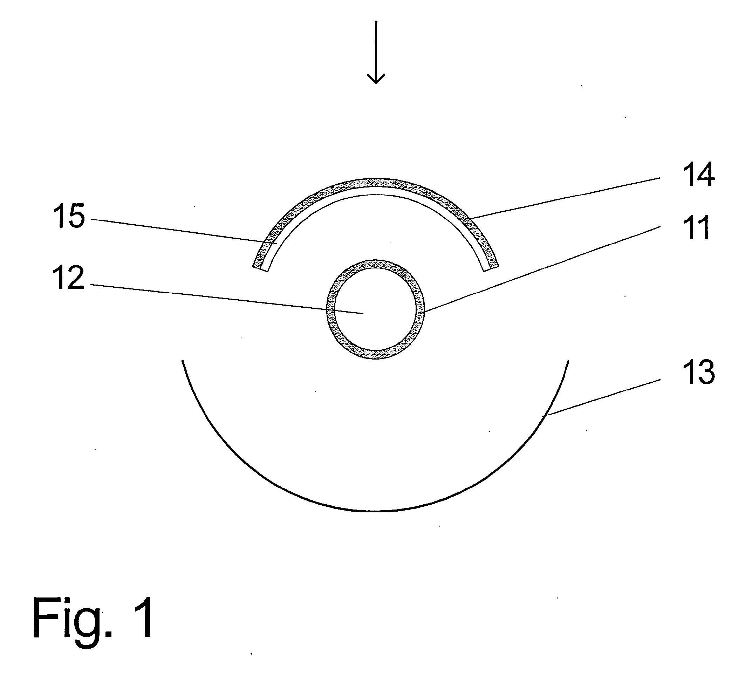

In den Fig. 1 bis 4 stellt der abgebildete Pfeil jeweils die Sonnenstrahlrichtung dar, und in der nachfolgenden Beschreibung der Fig. 1 bis 4 sind die Aussagen "vor dem Absorberrohr" bzw. "hinter dem Absorberrohr" jeweils auf die Sonnenstrahlrichtung bezogen. Alle in der Beschreibung zu den Fig. 1 bis 4 benannten Schichten sind mittels Magnetron-Sputterverfahren abgeschieden.

In Fig. 1 ist eine erste Ausführungsform eines erfindungsgemäßen Solarkollektors schematisch im Querschnitt dargestellt. Ein Absorberrohr 11, welches im Rohrinneren 12 von Wasser als Wärmeträgermedium durchflossen ist, wird mit Sonnenlicht beaufschlagt. Hinter dem Absorberrohr ist ein konkav gewölbter Spiegel 13 angeordnet, der einen Teil der am Absorberrohr 11 vorbeigehenden Sonnenlichtstrahlen hin zum Absorberrohr 11 reflektiert. Vor dem Absorberrohr 11 befindet sich ein zum Absorberrohr hin konkav ausgebildetes transparentes Glassubstrat 14. Auf der dem Absorberrohr 11 zugewandten Seite des Glassubstrates 14 ist eine Wärmestrahlung reflektierende Beschichtung 15 abgeschieden. Die Wärmestrahlung reflektierende Beschichtung 15 umfasst sowohl eine 15 nm dicke Silberschicht, an welcher die vom Absorberrohr 11 in Richtung Glassubstrat 14 abgestrahlte Wärme reflektiert wird und eine 60 nm dicke Titandioxidschicht, welche als Schutzschicht für die Silberschicht dient. Bei einem Solarkollektor gemäß Fig. 1 fällt ein Teil des Sonnenlichts zuerst durch das transparente Glassubstrat 14, bevor es auf das Absorberrohr 11 trifft und dort in Wärmeenergie umgewandelt wird. Wie schon aus dem Stand der Technik bekannt wird auch ein Teil der Sonnenlichtstrahlen, die am Absorberrohr 11 vorbeigehen, vom Spiegel 13 zum Absorberrohr 11 hin reflektiert und trägt somit zu einer erhöhten Wärmeausbeute bei. Der Wirkungsgrad des Solarkollektors wird weiterhin erhöht, indem ein Teil der vom Absorberrohr 11 abgestrahlten Wärme von der Wärmestrahlung reflektierenden Beschichtung 15 am Glassubstrat 14 zurück zum Absorberrohr 11 reflektiert wird.

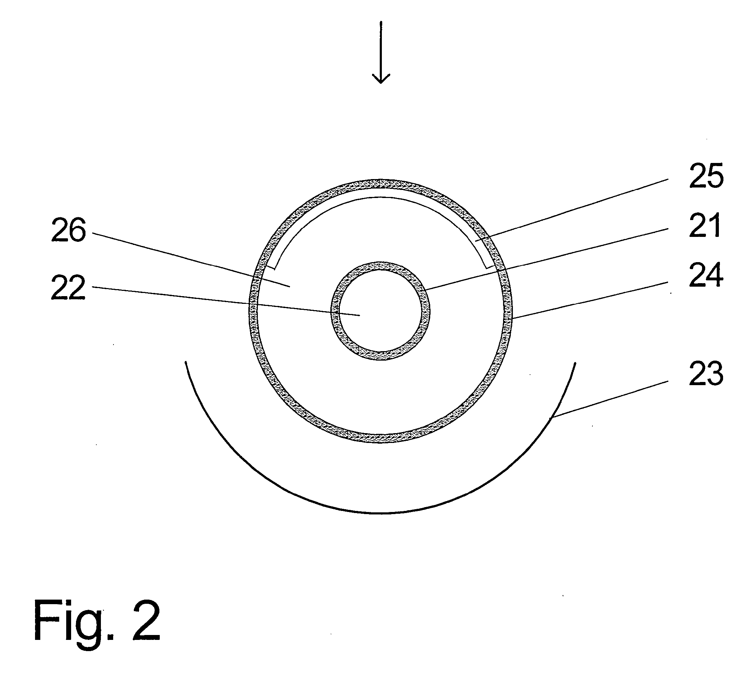

Eine alternative Ausführungsform eines erfindungsgemäßen Solarkollektors ist in Fig. 2 schematisch im Querschnitt dargestellt. Ein Absorberrohr 21, welches im Rohrinneren 22 von Wasser durchflossen ist, wird mit Sonnenlicht beaufschlagt. Hinter dem Absorberrohr 21 ist ein konkav gewölbter Spiegel 23 angeordnet, der einen Teil der am Absorberrohr 21 vorbeigehenden Sonnenlichtstrahlen hin zum Absorberrohr 21 reflektiert. Des Weiteren ist das Absorberrohr 21 vollständig von einem transparenten, rohrförmigen Glassubstrat 24 umschlossen. Vor dem Absorberrohr 21 weist das Glassubstrat 24 auf einem Teilbereich seiner inneren Rohroberfläche eine Wärmestrahlung reflektierende Beschichtung 25 auf. Die Wärmestrahlung reflektierende Beschichtung 25 umfasst vom Glassubstrat aus betrachtet zunächst eine 30 nm dicke Titandioxid-Schicht, dann eine 12 nm dicke Silber-Schicht und eine 35 nm dicke Titandioxid-Schicht. Die Titandioxid-Schichten wirken hier einerseits entspiegelnd bezüglich des auf das Glassubstrat 24 auftreffenden Sonnenlichtes und üben andererseits eine Schutzfunktion für die Silber-Schicht aus.

Im Bereich 26 zwischen Glassubstrat 24 und Absorberrohr 21 ist ein Vakuum ausgebildet. Aufgrund der Vakuumbedingungen können die Wärmeverluste des Absorberrohrs 21, die von Wärmeleitung herrühren, vernachlässigt werden. Die Wärmeverluste des Absorberrohrs 21 werden daher fast ausschließlich durch Wärmestrahlung verursacht, wobei die vom Absorberrohr 21 in Richtung Beschichtung 25 abgestrahlte Wärme von dieser Beschichtung reflektiert wird, wodurch sich wiederum die Wärmeverluste des Absorberrohres 21 weiter reduzieren lassen.

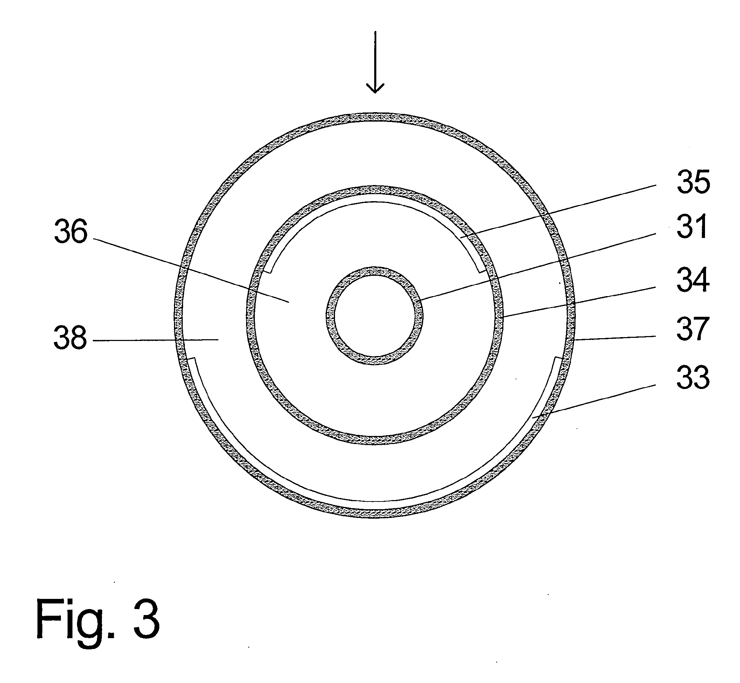

Fig. 3 zeigt eine weitere alternative Ausführungsform eines erfindungsgemäßen Solarkollektors in einer schematischen Querschnittsdarstellung. Ein Absorberrohr 31 ist bei dieser Ausführungsform von zwei transparenten, rohrförmigen Glassubstraten 34 und 37 umschlossen, wobei Glassubstrat 34 als Träger für eine Wärmestrahlung reflektierende Beschichtung 35 und Glassubstrat 37 als Träger für eine das Sonnenlicht reflektierende Spiegelschicht 33 fungiert. Alle drei Rohre 31, 34 und 37 weisen einen kreisrunden Querschnitt auf und sind zueinander konzentrisch ausgerichtet.

Die in Sonnenstrahlrichtung für Sonnenlicht transparente Wärmestrahlung reflektierende Beschichtung 35 besteht aus einem Schichtsystem, welches beginnend vom Glassubstrat 34 eine 30 nm dicke Titandioxid-Schicht, eine 12 nm dicke Silber-Schicht, eine 20 nm dicke Titandioxid-Schicht und eine 20 nm dicke Siliziumnitrid-Schicht als Deck- und Kratzschutz-Schicht umfasst.

Während der Hohlraum 36 zwischen Glassubstrat 34 und Absorberrohr 31 als Vakuum ausgebildet ist und somit beispielsweise den aus der Beschreibung zur Fig. 2 bekannten Vorteil hinsichtlich der nahezu nicht vorhandenen Wärmeverluste durch Wärmeleitung aufweist, ist der Hohlraum 38 zwischen den Glassubstraten 34 und 37 mit dem Gas Argon gefüllt. Dadurch wird unter anderem die Lebensdauer der aus Silber bestehenden Spiegelschicht 33, die auf der Innenseite des Glasrohres 37 aufgetragen ist, erhöht. Die Silberschicht wäre beispielsweise an Luftbedingungen einer Oxidation ausgesetzt, welche ihre Spiegeleigenschaften mit zunehmender Zeitdauer beeinträchtigen würde.

Bei einem Solarkollektor gemäß Fig. 3 trifft ein Teil der Sonnenstrahlen, nachdem diese die transparenten Glassubstrate 34 und 37 durchquert haben, direkt auf das Absorberrohr 31. Ein weiterer Teil der Sonnenstrahlen wird an der Spiegelschicht 33 hin zum Absorberrohr 31 reflektiert und trägt somit ebenfalls zum Erwärmen des durch das Absorberrohr fließenden Wärmeträgermediums bei.

Ein Teil der vom Absorberrohr 31 abgegebenen Wärmestrahlung wird von der Spiegelschicht 33 zurück zum Absorberrohr 31 reflektiert. Ein weiterer Teil der vom Absorberrohr abgegebenen Wärmestrahlung wird von der Wärmestrahlung reflektierenden Beschichtung 35 zurück zum Absorberrohr 31 reflektiert, wodurch der Wirkungsgrad des Sonnenkollektors nach Fig. 3 gegenüber dem Stand der Technik erhöht ist.

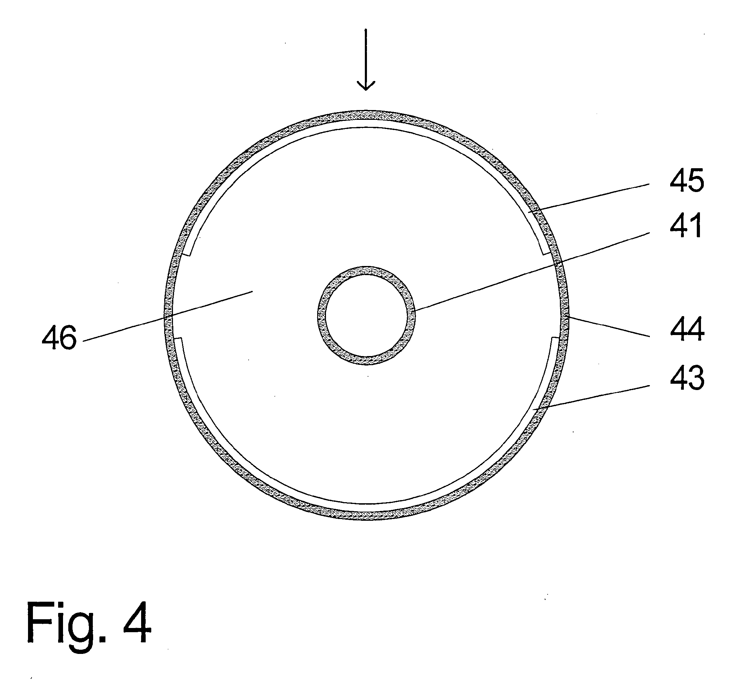

Eine weitere alternative Ausführungsform eines erfindungsgemäßen Solarkollektors ist in Fig. 4 schematisch im Querschnitt dargestellt. Ein Absorberrohr 41 ist von einem transparenten, rohrförmigen Glassubstrat 44 vollständig umschlossen. Auf der Innenwandung des Rohres 44 ist im Bereich hinter dem Absorberrohr 41 eine Spiegelschicht 43 abgeschieden, welche einfallendes Sonnenlicht in Richtung Absorberrohr 41 reflektiert. Ebenfalls auf der Innenwandung, aber in einem Bereich vor dem Absorberrohr, ist eine Wärmestrahlung reflektierende Beschichtung 45 abgeschieden, welche einen Teil der vom Absorberrohr 41 abgegebenen Wärmestrahlung zurück zum Absorberrohr 41 reflektiert. Im Hohlraum 46 zwischen Glassubstrat 44 und Absorberrohr ist wiederum ein Vakuum ausgebildet.

## Patentansprüche

1. Solarkollektor, umfassend mindestens ein von einem Wärmeträgermedium durchströmtes Absorberrohr (11) und einen aus Sonnenstrahlrichtung betrachtet mindestens hinter dem Absorberrohr (11) angeordneten Spiegel (13), welcher das einfallende Sonnenlicht in Richtung Absorberrohr (11) reflektiert, **dadurch gekennzeichnet, dass** aus Sonnenstrahlrichtung betrachtet vor dem Absorberrohr (11) ein für Sonnenlicht transparentes Substrat (14) angeordnet ist, welches zumindest in einem Oberflächenbereich eine Beschichtung (15) aufweist, die Wärmestrahlung in Richtung Absorberrohr (11) reflektiert.

2. Solarkollektor nach Anspruch 1, **dadurch gekennzeichnet, dass** das transparente Substrat (24) als Rohr ausgebildet ist, welches das Absorberrohr (21) umschließt.

3. Solarkollektor nach Anspruch 2, **dadurch gekennzeichnet, dass** zwischen dem Rohr (24) und dem Absorberrohr (21) ein Vakuum ausgebildet ist.

4. Solarkollektor nach Anspruch 2, **dadurch gekennzeichnet, dass** zwischen dem Rohr und dem Absorberrohr ein Gas eingelassen ist.

5. Solarkollektor nach Anspruch 4, **dadurch gekennzeichnet, dass** das Gas ein Edelgas ist.

6. Solarkollektor nach einem der vorhergehenden Ansprüche, **dadurch gekennzeichnet, dass** die Wärmestrahlung reflektierende Beschichtung (25) mindestens eine elektrisch leitfähige Schicht umfasst.

7. Solarkollektor nach Anspruch 6, **dadurch gekennzeichnet, dass** die elektrisch leitfähige Schicht einen Silberanteil aufweist.

8. Solarkollektor nach einem der vorhergehenden Ansprüche, **dadurch gekennzeichnet, dass** die Wärmestrahlung reflektierende Beschichtung mindestens eine dielektrische Schicht umfasst.

9. Solarkollektor nach Anspruch 8, **dadurch gekennzeichnet, das** die dielektrische Schicht eine Entspiegelungs-Schicht bezüglich des Sonnenlichts ist.

10. Solarkollektor nach einem der vorhergehenden Ansprüche, **dadurch gekennzeichnet, dass** die Wärmestrahlung reflektierende Beschichtung eine Transmission bezüglich des Sonnenlichts vom mindestens 60 % aufweist.

11. Solarkollektor nach einem der vorhergehenden Ansprüche, **dadurch gekennzeichnet, dass** die Wärmestrahlung reflektierende Beschichtung senkrecht zur Beschichtungsoberfläche ein Emissionsvermögen von maximal 0,1 aufweist.

12. Solarkollektor nach einem der vorhergehenden Ansprüche, **dadurch gekennzeichnet, dass** die Wärmestrahlung reflektierende Beschichtung auf der dem Absorberrohr abgewandten Seite des transparenten Substrates abgeschieden ist.

13. Solarkollektor nach einem der vorhergehenden Ansprüche, **dadurch gekennzeichnet, dass** die Wärmestrahlung reflektierende Beschichtung mittels eines PVD- oder CVD-Verfahrens abgeschieden ist.

14. Solarkollektor nach Anspruch 13, **dadurch gekennzeichnet, dass** die Beschichtung durch Magnetron-Sputtern abgeschieden ist.

15. Solarkollektor nach Anspruch 13, **dadurch gekennzeichnet, dass** die Beschichtung durch Verdampfen abgeschieden ist.

16. Solarkollektor nach einem der vorhergehenden Ansprüche, **dadurch gekennzeichnet, dass** der Spiegel (33) als Schicht ausgebildet ist, die an der Wandung eines zumindest in Sonnenstrahlrichtung transparenten Rohres (37) abgeschieden ist, welches das Absorberrohr (31) umschließt.
